(19) Europäisches Patentamt
European Patent Office
Office européen des brevets

(11) Publication number: **0 455 149 A2**

(12) # EUROPEAN PATENT APPLICATION

(21) Application number: **91106756.9**

(51) Int. Cl.[5]: **B29C 67/14**, B29B 15/12

(22) Date of filing: **26.04.91**

(30) Priority: **30.04.90 US 516653**

(43) Date of publication of application: **06.11.91 Bulletin 91/45**

(84) Designated Contracting States: **CH DE FR GB IT LI NL**

(71) Applicant: **BASF Aktiengesellschaft
Carl-Bosch-Strasse 38
W-6700 Ludwigshafen(DE)**

(72) Inventor: **Hartness, Timothy J.
26008 Morningside Drive
Tega Cay, South Carolina 29715(US)**

(54) **Fused towpreg and process for the production thereof.**

(57) Flexible, drapeable towpreg containing fused thermoplastic particles is produced by spraying a dispersion of thermoplastic particles onto a spread tow, fusing the thermoplastic particles onto the filaments at elevated temperature, and reconsolidating the spread tow into towpreg.

EP 0 455 149 A2

The present invention pertains to the field of fiber-reinforced thermoplastic composites. More particularly, the invention pertains to a process for the preparation of a flexible, drapeable fiber tow having thermoplastic particles fused thereto. Such tows are suitable for filament winding and weaving to form fiber-reinforced thermoplastic matrix structural composites following consolidation.

Thermoplastic fiber-reinforced composites have become important commercial products in recent years. Such composites are generally prepared by techniques similar to those used to prepare thermosetting fiber-reinforced composites, except that rather than heating to the cure temperature of the thermosetting resin, the thermoplastic products are heated to a temperature sufficient to fuse the thermoplastic. Thermoplastic composites generally require more severe pressure during consolidation due to their much higher matrix resin viscosity as compared to uncured thermoset resin systems.

Early attempts at preparing fiber-reinforced thermoplastic products useful in laying up or filament winding to form fiber-reinforced thermoplastic composite structures were to melt or solution impregnate unidirectional tape, woven, and non-woven fiber reinforcement. These products are suitable for forming composites having planar or modestly curvilinear shapes, and remain important commercial products. However, these materials are unable to be used to form complex shapes or for tasks such as filament winding around tight radii because the thermoplastic impregnated tows, tapes, cloth, and non-wovens are inherently stiff and "boardy". This is particularly true when fibers of high modulus, i.e. carbon and silicon carbide, are used as the fiber reinforcement.

Attempts to produce drapeable fiber-reinforced thermoplastic products has met with limited success. For example, in United States patent 4,894,105 unidirectional tapes of reinforcing fibers are impregnated with thermoplastic polymer particles by immersing the tape into an aqueous slurry of fine particle size polymer further containing thickeners and binders, following which a substantial amount of water is removed. The resultant tapes are relatively drapeable, but cannot withstand the rigors of weaving operations, and thus are limited to products in the form of tapes of various widths.

In copending application Serial Number 402,238 filed September 5, 1989 ultrasonic energy is utilized to aid impregnation of woven or non-woven materials with a polymer slurry. The resulting prepregs are drapeable, but as in the unidirectional products of U.S. patent 4,894,105 may suffer from loss of thermoplastic upon repeated handling, particularly in the dry state. Furthermore both application serial number 402,238 and U.S. patent 4,894,105 require the presence of binders and thickeners which can at times degrade the physical characteristics of the fused, consolidated composite.

Drapeable fiber-reinforced thermoplastic prepregs have been produced by cross or alternate weaves of fiber reinforcing tows and thermoplastic tows. However, such prepregs may not form a uniformly impregnated product upon consolidation, particularly with thermoplastics of high melt viscosity as is the case with certain of the polybenzimidazoles, polyimides, polyarylene ether sulfones, and polyarylene ether ketones. Furthermore, such a product is not available in towpreg or tape form.

In U.S. patent 4,874,563, thermoplastic fibers and reinforcing fibers are intimately blended to prepare a comingled tow. This tow may be woven into cloth or used directly for filament winding. However, the process requires expensive textile handling machinery and often proves difficult for some combinations of thermoplastic and reinforcing fibers. Furthermore, the process is limited to the use of thermoplastics available in fiber form.

In the article "Electrostatic Prepregging of Thermoplastic Matrices" SAMPE Journal Vol. 25, September/October 1989, two processes for preparation of thermoplastic powder towpreg are described. In one process, a spread tow is passed through a fluidized bed of thermoplastic and then extrusion coated to encapsulate the powder and fiber tow within a thermoplastic sheath. In the second process, the spread tow is impregnated by passing through an electrostatic fluidized bed followed by fusion of the thermoplastic in a radiant oven. The former process produces an unusual product and utilizes expensive equipment. The latter process produces a non-uniform product which cannot be used to form composites of optimal properties. It is stated, for example, that consolidation of towpreg between heated rollers following initial fusion will improve the wetout, but at the expense of drapeability, forming a boardy product.

It is an object of the present invention to prepare a flexible, drapeable towpreg suitable for filament winding or weaving operations by a simple, cost-effective process which can be used with a wide variety of reinforcing fibers, and a wide variety of thermoplastics. It is further an object of the invention to prepare by this process a towpreg having a uniform distribution of thermoplastic without requiring additional consolidation of the prepreg itself under heat and pressure. These and other objects were unexpectedly met by a process in which a tow of reinforcing fibers is spread into a thin flat unidirectional tape; a slurry of thermoplastic particles is sprayed onto the surface of the tape; the continuous phase is evaporated and the particles fused to the individual fibers; and the spread tow is recombined to form a drapeable fiber-reinforced thermoplastic particle-impregnated towpreg.

Figure 1 depicts a schematic of the process of the present invention.

Figure 2 and 3 depict a gas banding or spreader box which may be utilized in the process of the invention.

The fiber reinforcement utilized in the subject invention is supplied in the form of a fiber tow or yarn having a multiplicity of individual fibers. Such tows are readily available and may be formed, for example, from various glasses, e.g. the borosilicate glasses; quartz; silicon carbide; carbon (carbon/graphite); boron nitride; ceramics; and other inorganic fibers. Where the particulate thermoplastic has a low melting point, organic reinforcing fibers having a sufficiently high melting point to withstand the fusion step without themselves fusing may be used. For example, when thermoplastics such as polypropylene and polyethylene terephthalate are utilized as the thermoplastic matrix, reinforcing fibers of liquid crystalline polyesters, polyaramids, polyethersulfones, or polyetherketones may be utilized.

The reinforcing fiber tows contain from 50 to about 100,000 individual fibers or filaments. Most commercial tows contain between 1000 and 20,000 individual fibers (1K to 20K). Preferred are tows containing from 3K to 12K filaments. The tows generally have a small degree of twist imparted during tow formation to aid in keeping the tow intact during processing. The twist may be from 0.1 to about 5 turns per meter of tow, for example. Tows having high twist must be at least partially untwisted before use in the subject process, otherwise fiber spreading will not occur, or will occur in a non-uniform manner.

The thermoplastics useful as particulate thermoplastics in the process of the subject invention include virtually all known thermoplastics. Furthermore, while the discussion heretofore has centered on thermoplastics as the term is conventionally used, it must be noted that the process may also be applied to solid thermosetting resins which are thermoplastic, i.e. show melt behavior, at a temperature below the gel temperature of the resin. Thus, for example, solid bismaleimide resins which melt before they crosslink to form a thermoset structure, or solid epoxy resins may be advantageously utilized to form a thermosetting towpreg whose drapeability is superior to the same thermosetting towpreg when produced by conventional melt or solution impregnation.

Polymer particles containing both thermoplastics and thermosetting resins may also be utilized, provided again that the thermosetting resin gel point is sufficiently high to avoid premature crosslinking during fusion. Finally, individual particles some of which are thermosetting particles and some of which are thermoplastic or combination thermosetting/thermoplastic particles may be utilized. Such hybrid polymer prepregs may be produced in one spraying/fusion step, or may be made by first spraying and fusing the higher melting component followed by a further spraying/fusion of the lower melting component.

In the foregoing manner, drapeable towpreg having properties unavailable by any other process may be obtained. For example, matrix resin systems containing two inter-reactive thermosetting monomers may be obtained which are not available through melt or solution impregnation due to premature reaction which would occur during prepregging.

Preferred particulate thermoplastics useful in preparing the drapeable towpreg of the subject invention include the lower melting thermoplastics such as the polyalkylenes, for example polypropylene, polyethylene and polybutylene; the polyesters, both aliphatic and aromatic, for example polyethylene terephthalate, polybutylene terephthalate, and polyhexylene adipate; polystyrene; the aliphatic nylons; and the like. Preferred higher melting thermoplastics include the liquid crystalline polyesters; the all aromatic polyamides, or aramids; the polyphenylene ethers, polyphenylene sulfides, and polyphenylene ether sulfides; the polyimides; the polybenzimidazoles; and the polyarylene polymers having aromatic nuclei linked by interspersed groups selected from a covalent bond; -O-; -S-;

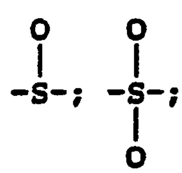 $C_1$-$C_{10}$

substituted or unsubstituted aliphatic or cycloaliphatic groups, particularly those of the formula

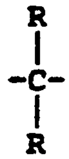

wherein R is H, F, Cl, $C_1$-$C_{10}$ alkyl or cycloalkyl or $C_6$ or $C_{10}$ aryl, or perfluorinated $C_1$-$C_3$ alkyl;

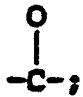; 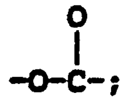; 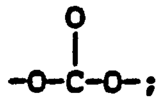; and 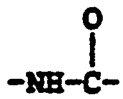.

The type of thermoplastic is largely dependent upon the application. Thus for aerospace applications involving high strength and high temperature performance, the polyphenylene sulfides, polyetherketones, polyethersulfones, polyimides, or polybenzimidazoles may be selected, in particular when combined with carbon fibers. For transportation applications, i.e. bumper beams, engine covers, and the like, polypropylene, nylon, or polyethylene terephthalate may be selected as the thermoplastic with glass fiber as the reinforcement.

The thermosetting particles useful in the practice of the subject invention include, but are not limited to, solid cyanate resins, solid epoxy resins, solid isocyanate resins, and solid bismaleimide resins. Comonomers which are solid or which may be dissolved or dispersed in the solid thermosetting particles include the diamine terminated comonomers and alkenylphenol comonomers generally utilized with such thermosetting resins. Particular advantages of the subject invention in this respect is that mixtures of thermosetting resins and comonomers may be utilized whose use would not be possible in normal melt or solution prepregging due to too high a melt viscosity at temperatures suitable for prepregging; which would react prematurely at high melt impregnation temperatures; or whose solubility in acceptable prepregging solvents is limited. Examples of such thermosetting resins are the reactive functional group terminated oligomeric polyetherketones, polyethersulfones, and polyimides, for example. Examples of such comonomers generally not generally useful in traditional thermoset prepregging are the solid or high viscosity liquid propenyl-and allylphenoxy- terminated and amino- terminated oligomeric polycyclopentadienes, polyetherketones, and polyethersulfones.

The mean particle sizes of particulate thermoplastics, particulate thermoplastic/thermosets, and particulate thermosets having melt temperatures below their gel point, lies between 0.1 µm and 100 µm. Preferably, at least 50% of particle sizes by volume distribution as determined by particle size analysis should be smaller than 50 µm, and most preferably the mean particle size lies between 3 µm and 20 µm. Thermoplastics and thermosetting resins are available commercially in such sizes or may be size reduced by methods well know to those skilled in the art such as cryogrinding, sand milling, air jet milling, solution precipitation, and spray drying.

Methods of spreading fiber tows are well known to those skilled in the art. Combs, spreader bars or rollers, venturis, banding jets, and electrostatic methods are all suitable. Such methods are described, for example, in U.S. patents 3,873,389, 3,358,436, and 4,874,563 which are incorporated herein by reference as to the portions of such disclosures which relate to the spreading or banding of tows.

The width of the fiber tow may be varied, however best results are obtained when the degree of spread approaches a monolayer of fibers. For example, with Hercules AS-4 unsized carbon tow containing 3K filaments, a spread width of 3.5 inches (8.9 cm) has been found to work well. In this case, the initial tow width was approximately 0.1 inch (2.5 mm).

From the tow creel, the tow enters a tension control roll following which it is spread by one of the methods described above, preferably by a gas banding jet as depicted in Figures 2 and 3. The polymer slurry, preferably having a viscosity of less than 50 cps, is sprayed as a fine mist onto the spread fibers following which the spread thermoplastic particle-containing tow is passed through a heating zone to fuse the thermoplastic or thermosetting particles to the fibers. The spread tow is then recombined using standard tow processing equipment to form a flexible, drapeable thermoplastic particle impregnated towpreg.

The particulate polymer slurry may have a solids content of from 5 to about 50 weight percent, preferably about 10 weight percent. The solids loading must be consistent with sprayability. Furthermore, the particle loading must be adjusted for the rate of spraying, i.e. to achieve the desired polymer loading in

the towpreg, which may vary between 10 and 90 percent, preferably between 25 and 60 percent by weight. To prevent the particles from settling in the slurry, the slurry may be agitated or suitable dispersants may be added to stabilize the dispersion. Thickening agents such as high molecular weight lightly crosslinked polyacryates, for example the CARBOPOL® polyacrylates available from the Rohm and Haas Company, or high molecular weight polyoxyethylene glycols, polyvinylalcohols, or the like may be used. Suitable thickening agents preferably exhibit shear thinning behavior. Examples of such agents are disclosed in U.S. patent 4,894,105 which is here incorporated by reference.

The liquid utilized in preparing the polymer dispersion is preferably water for both economic, toxicological, and ecological reasons. However, other liquids which do not dissolve the thermoplastic or thermosetting resin are suitable. At times it may be preferable to add such liquids to water to reduce the slurry viscosity. An example of such a liquid is isopropanol. Other lower alcohols such as methanol, ethanol, and propanol, and low molecular weight hydroxyethers such as methoxyethanol and ethoxyethanol may also be utilized. These liquids may also assist in stabilizing the dispersion.

The fusion of the particles onto the spread tow or tape may be advantageously performed by passing the tow containing sprayed-on particles through an oven. Other equivalent means, such as hot air, radio frequency heating, or radiant heat, may be utilized. The temperature of the fusion step must be adjusted for the particular thermoplastic and is further dependent upon the line speed. Such adjustments may readily be made by those skilled in the art.

Figure 1 illustrates overall towpreg production schematically. The reinforcing fiber tow (2) is drawn from bobbin (1) around godet roll (3). The tow is directed by air bearing roller (4) into spreader box (5) where it is spread to the desired width. The spread tow (6) is sprayed with particulate polymer dispersion (8) through spray nozzle (7). The thermoplastic particles are fused onto the spread tow in oven (9), exiting as a fused, spread tow (10) which is reconsolidated into an unspread towpreg by consolidation wheel (11), and taken up on bobbin (13). Godet roll (12) is optional. The godet rolls (3 and 12) and bobbin (13) are driven at speeds suitable to facilitate fiber spreading and at speeds sufficient to allow the desired volume of spray to be deposited on the spread fibers. When utilizing a banding jet, for example, too high a tension on the tow will limit the fiber spread, as will also too high a tension on the air bearing roller. Suitable adjustments are easily made by those skilled in the art of textile processing.

Figures 2 and 3 illustrate the banding jet which is one spreading device which may be utilized in the subject invention. Figure 2 illustrates an open spreader box with two banding jets. The jets are formed by gas passing through V-shaped channels. The tip of the V points in the direction of fiber movement. The included angle may vary, but is preferred to be about 160°. The width of the channel may be varied to take into account fibers of different deniers, as may the gas pressure and hence velocity, but is preferably c.a. 0.1 inch (2.5 mm). In its most preferred embodiment, the spreader box utilizes two banding jets although one jet, or more than two jets may also be utilized.

Figure 3 shows the spreader box closed with multiple tows entering and a uniform spread tape exiting the box. The tape utilized in the subject invention is preferably prepared from but one tow, however multiple tows may be utilized as well. Gas pressure into the spreader box is preferably between 0.5 psi and 10 psi, with preferred pressure between 4 and 5 psi.

The gas banding jet shown in figures 2 and 3 consists of a gas box (1) into which compressed air or another gas is fed through a conventional adjustable gas metering means (2). The preferred pressure of gas flow into the gas jet is in the range of approximately 0.5 to 10 psi. One, or more than one, gas exit ports (3) are provided to cause gas from within the gas box to impinge in a generally perpendicular fashion upon the fiber tow which passes across the exit ports. Preferably the exit ports are V-shaped and pointed in the direction of movement of the fiber tow across the box.

As shown in figure 3, the gas banding jet is provided with shims (4) or other means to allow a gas box cover (5) to be attached, so that a flow channel for the fibers is provided. The gas box cover is held in place by convenient attachment means, such as clamps (6).

The spray nozzle useful in the subject invention may be specially designed for use with dispersions of particulates, but commercial paint sprayers have been found suitable. Such units are available from Binks as the Binks 61 Spray Gun, from Campbell-Hausfeld as the DH4200 Spray Gun, and from MasterFlex. The Binks Spray head was modified to improve dispersion flow by removing the springs from the needle emulsion flow control. Air flow was connected to the nozzle outlet only. Pulsation protection is desired for smooth output. A MasterFlex pump with quick load head was used to pump the slurry to the spray head.

Examples 1-5

Hercules AS4-3K carbon fiber was utilized and spread to 3.5 inch (8.9 cm) width. The thermoplastic

particle slurry of PEEK 150 contained 10 or more weight percent particles dispersed in water. Average particle size was approximately 17 microns. Slurry viscosity was less than 50 centipoise (0.05 Pa•sec). Various line speeds were used. A Kamitsu winder was utilized in these examples although Leesona winders have also been utilized. The particles were fused by passage through a hinged 4' x 5" (120 cm x 12.5 cm) Lindberg three zone tube furnace P/N 55667 temperature controlled by use of a Lindberg 58434-B Control Console. The oven is capable of achieving 1200 C. In the examples, each zone was set at the same temperature resulting in a temperature in the vicinity of the towpreg of approximately 450-470C. Front and rear godet rolls were manufactured by Fycon, Inc., and driven at the same speed (10-45 ft/sec; 3.0-13.7 m/sec).

Example 7

A sample of towpreg as prepared in Example 3 was frame wrapped using a 3" x 11" frame and compression molded using a Graphitool™ tooling form with a Upilex® release film at 780 F (416 C) and at a pressure of 200 psi (1.38 MPa) for 30 minutes. Heat up rate was approximately 8 C/min, with cool down at greater than 20 C/min under pressure. Initial mechanical properties were measured by modified ASTM-D790 in which a small rubber pad approximately .5" x .5" x .125" is placed under the middle loading nose to prevent local fiber damage during the test. The results give good backface tensile failures as is called for in the ASTM test description.

| | | |
|---|---|---|
| 0° Flexural Strength | 350 ksi | (2.41 GPa) |
| 0° Flexural Modules | 16.17 msi | (111 GPa) |
| 90° Tensile Strength | 11.96 ksi | (82.40 MPa) |
| 90° Tensile Modules | 1.32 msi | ( 9.09 GPa) |

The composite had a fiber content of 57% and a void content of 0.0%

| | Examples | | | | |
|---|---|---|---|---|---|
| | 1 | 2 | 3 | 4 | 5 |
| Run Speed m/min | 8.6 | 11.6 | 6.9 | 6.5 | |
| Emulsion Delivery (g/min.) | 89 | 104 | 62 | 81 | |
| Air Delivery (psi) | 17 psi | 20 psi | 9 psi | 6 psi | |
| Oven Setting °C. | 660C | 680C | 680C | 665C | |
| Fusion Temperature °C | 452C | 466C | 466C | 455C | |
| Resin Content, wt % | 27.5 | 24.0 | 37.2 | 41 | 68.8 |
| Towpreg Appearance | good | fair | good | good | good |
| Comments | | large spray droplets | | | incomplete fusion |
| Flexibility | --- | excellent | excellent | --- | --- |
| Emulsion Solids Concentration (%) | 10% | 10% | 15% | --- | |

## Claims

1. A process for the preparation of a flexible, drapeable towpreg containing from 10 to about 90 weight percent of fused resin particles, comprising:
   a) spreading a tow of fiber reinforcement;
   b) spraying onto the spread tow which is the product of step (a) a dispersion of resin particles having a mean size of from 0.01 to about 100 μm dispersed in a liquid continuous phase;
   c) fusing said resin particles onto the filaments of the spread tow to form a resin particle-containing tape;
   d) recombining said resin particle-containing tape into a resin particle containing towpreg,

   wherein said resin particles comprise i) a thermoplastic having a melt temperature greater than about 50 ° C; ii) a solid thermosetting resin or mixture of thermosetting resins; iii) a mixture of thermoplastic and thermosetting resins; or iv) a mixture of i) - iii), wherein said thermosetting resin or mixture of thermosetting resins fuses at a temperature below the gel point of said thermosetting resin or mixture of resins.

2. The process of claim 1 wherein said fiber reinforcement comprises carbon fibers, glass fibers, quartz fibers, aramid fibers, or silicon carbide fibers.

3. The process of claim 1 wherein said thermoplastic is selected from the group consisting of thermoplastic polyimides, polyarylene ether sulfones, polyarylene ether ketones, aliphatic polyamides, aromatic polyamides, polyphenylene sulfides, polybenzimidazoles, and liquid crystalline polymers.

4. The process of claim 1 wherein said dispersion contains from 5 to about 50 weight percent of thermoplastic particles.

5. The process of claim 1 wherein the major portion of said continuous phase is water.

6. A flexible, drapeable towpreg having fused to the individual fibers thereof from 10 to about 90 weight percent of resin particles having a mean particle size of from 0.1 to about 100 μm, wherein said resin particles may be the same or different, and are selected from the group consisting of a) thermoplastics or mixtures of thermoplastics having a melting point greater than 50C; b) thermosetting resin monomers or mixtures thereof which have a melting point below their gel point temperature; and c) mixtures of thermosetting monomer(s) and thermoplastics which exhibit a melting point below the gel point temperature of the thermosetting monomer(s).

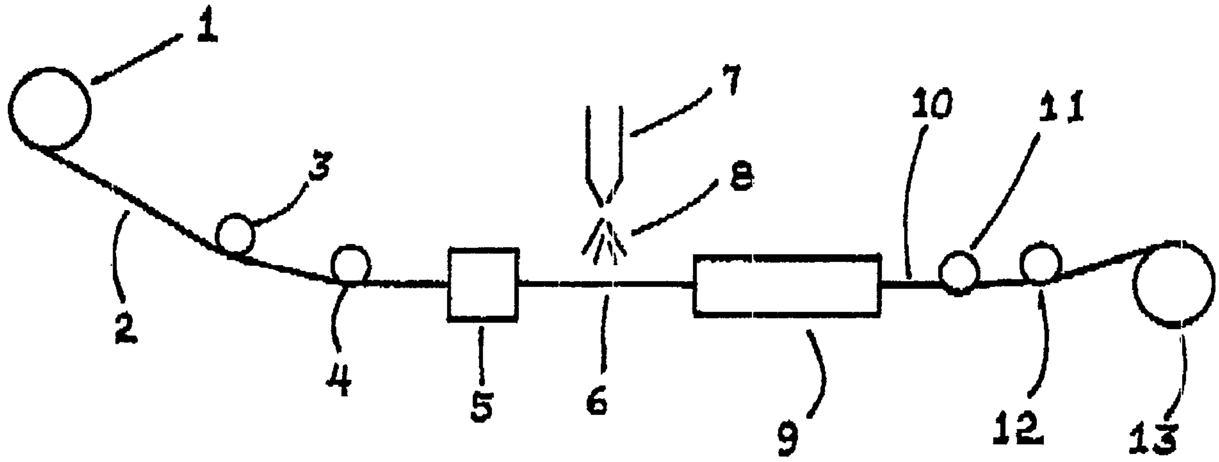


FIGURE 1

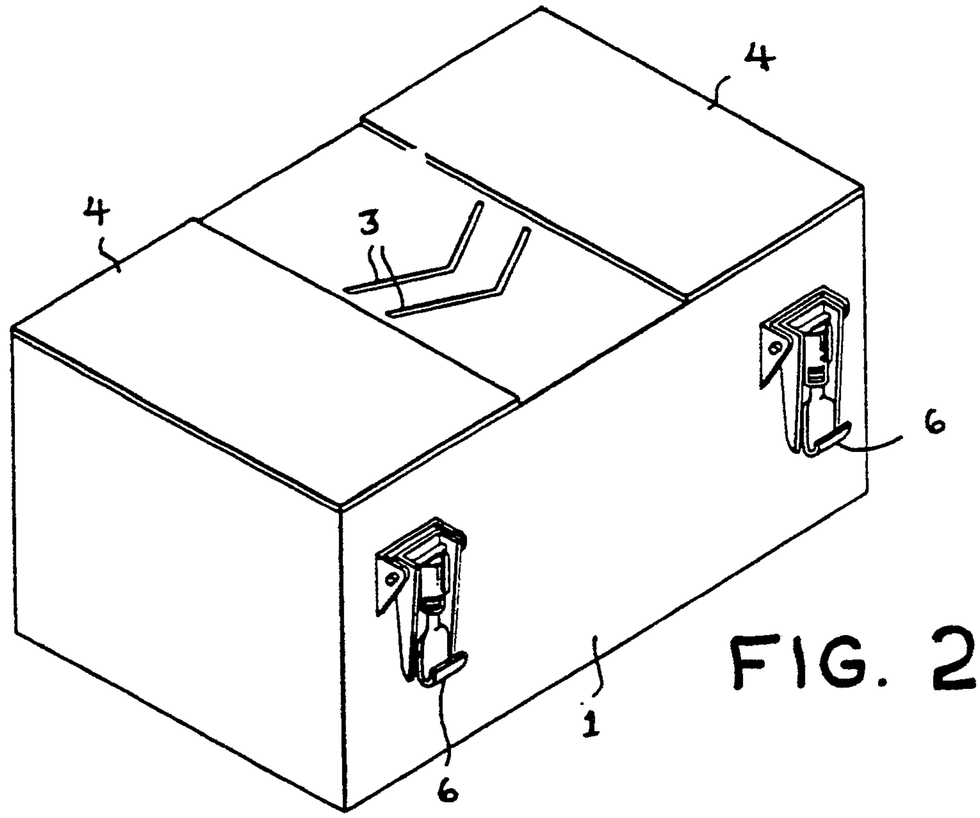


FIG. 2

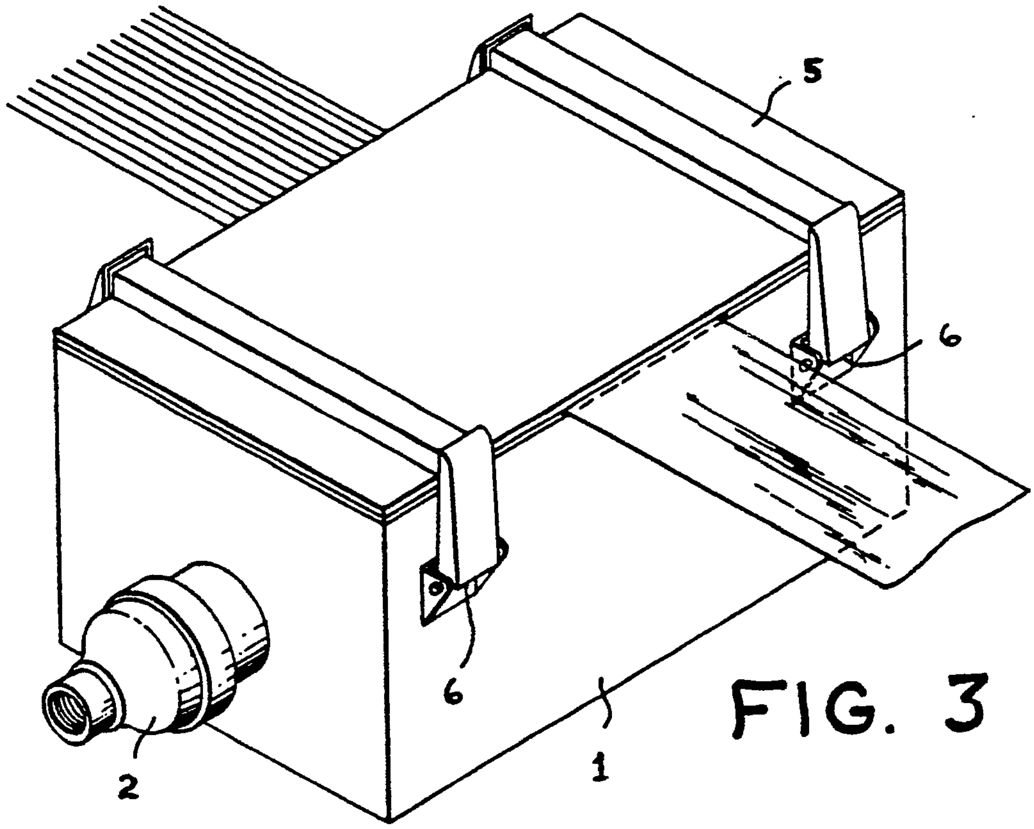


FIG. 3